# EUROPÄISCHE PATENTANMELDUNG

(11) **EP 1 471 038 A2**
(43) Veröffentlichungstag der Anmeldung: **27.10.2004**
(21) Anmeldenummer: 04008387.5
(22) Anmeldetag: 07.04.2004
(51) Int. Cl.: C03B 19/14, C03C 3/06, C03C 4/00

(54) **Verfahren zur Herstellung von Glaskörpern aus dotiertem Quarzglas**

(30) Priorität: 20.10.2003 DE 10349648; 26.04.2003 DE 10318935
(71) Anmelder: Schott Glas, 55122 Mainz (DE); CARL-ZEISS-STIFTUNG trading as Schott Glas, 55122 Mainz (DE)
(72) Erfinder: Hack, Hrabanus, 55126 Mainz (DE); Schuhmacher, Jörg, 70806 Kornwestheim (DE); Schmidt, Matthias, 07749 Jena (DE); Menzel, Andreas, 07745 Jena (DE)
(74) Vertreter: Gahlert, Stefan, Dr.-Ing.

(57) **Zusammenfassung**

Es wird ein Verfahren zur Herstellung von Glaskörpern aus dotiertem Quarzglas durch Flammenhydrolyse angegeben, bei dem mittels eines einzelnen Brenners (14), dem Brennstoff und Precursoren zur Bildung des Glases zugeführt werden, ein Formling (24) auf einem Target (28) erzeugt wird. Das so hergestellte dotierte Quarzglas zeichnet sich durch eine geringe Defektdichte und eine verringerte Schlierendicke aus. Vorzugsweise wird der Formling (24) anschließend zu einem zweiten Formling umgesenkt wird, der eine größere Breite und geringere Höhe als der erste Formling aufweist. Dadurch können die Defektdichte und die Schlierendicken weiter reduziert werden (Fig. 1).

## Beschreibung

Die Erfindung betrifft ein Verfahren zur Herstellung von Glaskörpern aus dotiertem Quarzglas. Die Erfindung betrifft ferner defektarme dotierte Quarzgläser.

In der EUV-Lithografie (Extreme Ultra Violet) werden als Substratmaterialien für die dabei verwendeten reflektierenden Optiken und Masken Werkstoffe benötigt, die im Temperaturbereich zwischen 20 und 30°C keine merkliche thermische Ausdehnung aufweisen. Hierzu wurden sogenannte NZTE-Materialien (Near Zero Thermal Expansion) entwickelt. Ein Material, das diese Bedingungen erfüllt, stellt mit Titanoxid dotiertes Quarzglas dar, das von der Firma Corning Incorporated unter dem Markennamen ULE vertrieben wird.

Ein Verfahren zur Herstellung von ULE^{TM}-Glas ist aus der US 5 970 751 bekannt. Hierbei wird das dotierte Quarzglas durch Flammenhydrolyse in einem Mehrbrennerverfahren erschmolzen, bei dem den Brennern eine Mischung aus einem Siliziumoxid-Precursor und einem Titanoxid-Precursor in Gasform zugeführt wird, wobei die Dampfmischung in den Flammen der Brenner SiO₂-Partikel und TiO₂-Partikel bildet, die sich in einem Ofen absetzen, in dem sie schmelzen und einen festen Glaskörper bilden, dessen Form durch den verwendeten Schmelztiegel vorgegeben ist. Der so hergestellte Glaskörper, der einen Durchmesser von einem Meter oder mehr aufweisen kann, wird als Boule bezeichnet. Aus diesem Boule werden dann die Formkörper herausgearbeitet, die bspw. als reflektierende Spiegel in der EUV-Lithografie verwendet werden sollen.

Als problematisch haben sich bei derartig hergestellten Boules für eine Anwendung in der EUV-Lithografie allerdings Defekte erwiesen, die verfahrensbedingt als Bulk-Defekte während der Schmelze ins Massivmaterial eingebaut werden und bei der Politur von Masken- und Spiegelrohlingen, die aus diesem Material gefertigt werden, an die Oberfläche treten. Sie bergen in diesem Zusammenhang die Gefahr, nicht in gleicher Weise wie das Matrixmaterial beim Polieren abgetragen zu werden. So können Erhebungen auf der Substratoberfläche entstehen oder die Defektbereiche als werden als Ganzes aus der Matrix herausgelöst und hinterlassen so Vertiefungen auf der Substratoberfläche.

Die auf diese Weise erzeugten Oberflächeneffekte wirken als optische Streuzentren, die die Qualität der hieraus hergestellten Produkte erheblich beeinträchtigen. Insbesondere ergeben sich Probleme bei der Beschichtung von polierten Masken- und Spiegelrohlingen, die ihrerseits eine starke Beeinträchtigung der Abbildungseigenschaften beim Einsatz der reflektierenden Komponenten in der EUV-Lithographie bedingen.

Darüber hinaus führt die Dotierung mit solchen Komponenten, die einen von Quarzglas mehr oder weniger stark abweichenden Brechungskoeffizienten aufweisen, zur Erzeugung von Schlieren, die für die Anwendung des Materials in der EUV-Lithografie nachteilig sind.

Die Schlieren weisen eine Dicke von durchschnittlich 150 µm auf, was insbesondere bei der Anfertigung asphärischer EUVL-Optiken zu Unebenheiten an den Oberflächen der Komponenten führt. Diese Unebenheiten müssen durch IBF-Bearbeitung (Ion Beam Figuring) nachträglich unter hohem Aufwand geglättet werden.

Gemäß der WO-A-0232622 wird vorgeschlagen, die Nachteile der im Material vorhandenen Schlieren zu vermeiden, indem das Glas bei der Herstellung der Komponenten so bearbeitet wird, dass die Schlieren im Inneren den Wölbungen der Komponentenoberfläche folgen und so möglichst nicht an die Oberfläche treten.

Das Herstellverfahren ist jedoch kompliziert und kann nicht mit ausreichender Sicherheit vermeiden, dass die Oberflächenbeschaffenheit dennoch durch Schlieren oder Defekte beeinträchtigt wird.

Es ist zwar grundsätzlich bekannt, dass undotiertes Quarzglas durch Flammenhydrolyse mit relativ hoher Qualität hergestellt werden kann (vgl. WO-A-98/40319 oder EP-B-0861812). Jedoch lassen sich diese Verhältnisse nicht auf die Herstellung von dotierten Quarzgläsern übertragen, wie sich aus der US-A-5154744 ergibt. Bei der Herstellung von mit Titanoxid dotierten Quarzgläsern wird nämlich hierbei unmittelbar an eine Herstellung durch Flammenhydrolyse ein Heizschritt in einer Helium/Chlor-Atmosphäre angeschlossen, um eine vollständige Konsolidierung der hergestellten Formkörper zu erreichen, bevor diese zu Fasern ausgezogen werden.

Der Erfindung liegt somit die Aufgabe zu Grunde, ein verbessertes Verfahren zur Herstellung von Glaskörpern aus dotiertem Quarzglas zu schaffen, mit dem das so hergestellte Quarzglasprodukt eine höhere Qualität als bei herkömmlichen Verfahren aufweist. Insbesondere soll der Glaskörper weniger Defekte aufweisen. Zusätzlich oder alternativ soll möglichst eine gegenüber herkömmlichen Verfahren verringerte Schlierendicke erreicht werden. Insbesondere sollen erfindungsgemäß hergestellte Quarzglasprodukte als Substratmaterial zur Herstellung von reflektierenden Optiken und Masken in der EUV-Lithografie geeignet sein.

Diese Aufgabe wird durch ein Verfahren zur Herstellung von Glaskörpern aus dotiertem Quarzglas durch Flammenhydrolyse gelöst, bei dem mittels eines einzelnen Brenners, dem Brennstoff und Precursoren zur Bildung des Glases zugeführt werden, ein erster Formling auf einem Target erzeugt wird.

Die Aufgabe der Erfindung wird auf diese Weise vollkommen gelöst.

Durch die Herstellung des Formlings mittels eines einzelnen Brenners wird erreicht, dass keine störenden Wechselwirkungen zwischen zwei oder mehreren Brennern auftreten können, wie dies bei einem Mehrbrennersystem stets der Fall ist. Die Möglichkeit der sauberen, ruhigen Umströmung der Kappe der sich während des Herstellungsprozesses ausbildenden Walze ist deshalb deutlich verbessert.

Auf diese Weise wird eine Herstellung von dotierten Quarzgläsern mit deutlich weniger und kleineren Defekten ermöglicht. In dem so hergestellten Quarzglaskörper finden sich deutlich weniger Defekte als bei der Herstellung mittels mehrerer Brenner in Form von Boules. Störpartikel, z.B. Ablösungen aus dem Ofenwandmaterial, können während des Schmelzprozesses nicht auf die Kappe des Formlings gelangen und werden somit nicht in das Material eingebaut. Vielmehr werden sie mit den Brennerabgasen aus dem Ofen ausgetragen. Es ergibt sich so eine deutlich geringere Defektdichte als bei herkömmlichem, etwa mit Titanoxid dotierten Quarzglas etwa gemäß der US-A-5979751.

Gleichzeitig werden hierbei deutlich kleinere Schlieren als beim Mehrbrennerverfahren gemäß der US-A-5979751 erzeugt.

Das erfindungsgemäße Einkammerverfahren besitzt den Vorteil, dass eine einzige Hauptströmung im Bereich der Aufschmelzzone ausgeprägt wird.

Gemäß einer vorteilhaften Weiterbildung der Erfindung wird der Formling anschließend zu einem zweiten Formling umgesenkt, der eine größere Breite und geringere Höhe als der erste Formling aufweist.

Hierbei wird in dem ersten Schritt ein erster Formling erzeugt, bei dem es sich um einen langen, dünnen Formling handelt. Dieser erste, dünne Formling (auch Walze genannt) wird durch Senken in einen zweiten Formling umgeformt, dessen Form und Größe der Sollgeometrie der herzustellenden Komponente entsprechen kann oder daran angenähert sein kann.

Durch das Umsenken wird die Schlierendicke um den beim Umsenken auftretenden Fließfaktor reduziert. Es ist auf diese Weise eine Schlierendicke von ≤ 70 µm ohne Weiteres erreichbar. Auch Schlierendicken von ≤ 10 µm sind möglich. Eine weitere Verringerung der Schlierendicke ist durch weitere Umsenkschritte erreichbar, sofern dies nach den jeweiligen Anforderungen notwendig sein sollte.

Bei der Dotierung kann es sich bevorzugt um eine Dotierung mit TiO₂ handeln. Jedoch kann die Erfindung vorteilhaft bei der Herstellung von beliebig dotiertem Quarzglas genutzt werden, also beispielsweise, wenn der Glaskörper mit einer Dotierung hergestellt wird, die Fluor, Germanium, Vanadium, Chrom, Aluminium, Zirkon, Eisen, Zink, Zinn, Tantal, Bor, Phosphor, Niob, Blei, Hafnium, Molybdän oder Wolfram enthält. Es handelt sich hierbei um Dotierungen, die zu einer relativ starken Veränderung des Brechungsindex von Quarzglas führen.

Die Dotierung beträgt vorzugsweise mindestens etwa 0,1 Gew.-%, vorzugsweise mindestens etwa 0,5 Gew.-% und liegt bei den meisten Dotiermitteln im Prozentbereich. Dagegen liegt die Dotierung bei Fluor in einem niedrigeren Bereich von mindestens etwa 50 Gew.-ppm, meist bei einigen Hundert Gew.-ppm.

In vorteilhafter Weiterbildung der Erfindung wird das Target während der Herstellung des ersten Formlings rotierend angetrieben.

Hierbei wird ferner der Abstand des Formlings zum Brenner, d.h. der Abstand zwischen der Kappe des Formlings und dem Brenner, während der Herstellung annähernd konstant gehalten.

Durch diese Maßnahmen wird ein möglichst gleichmäßiger, defektarmer Formling weitgehend rotationssymmetrischer Form erzeugt.

Die Precursoren werden dem Brenner vorzugsweise gasförmig zugeführt.

Als Target zum Aufwachsen des ersten Formlings wird in bevorzugter Weiterbildung der Erfindung eine Scheibe verwendet, die etwa aus Quarzglas oder einem anderen geeigneten Material bestehen kann. Auch kann als Target eine Ansatzscheibe etwa aus Quarzglas oder bevorzugt dotiertem Quarzglas verwendet werden.

Das Target kann annähernd horizontal angeordnet werden und der erste Formling in annähernd vertikaler Richtung aufwachsen. Alternativ ist es auch möglich, das Target annähernd vertikal anzuordnen und den ersten Formling in annähernd horizontaler Richtung auf dem Target aufwachsen zu lassen.

Wie bereits erwähnt, eignet sich das erfindungsgemäß hergestellte, insbesondere mit TiO₂ dotierte Quarzglas besonders zur Herstellung eines EUVL-Substratmaterials.

Besonders günstige Ergebnisse mit geringen Schlierendicken lassen sich erzielen, indem weitere Umsenkschritte vorgenommen werden.

Eine EUVL-Komponente lässt sich aus einem derartigen Formling durch Feinbearbeitung auf die gewünschte Form, Größe und Oberflächenbeschaffenheit herstellen.

Es versteht sich, dass die zuvor genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung einer Vorrichtung zur erfindungsgemäßen Herstellung eines Formlings durch Flammenhydrolyse;
- Fig. 2: eine schematische Darstellung des Umsenkprozesses zur Herstellung eines zweiten Formlings mit größerem Durchmesser und geringerer Höhe;
- Fig. 3a,b: Schlierenbilder vor und nach dem Umsenken von mit TiO₂ dotiertem Quarzglas;
- Fig. 4a: eine Defektmap eines 6"-Maskblanksubstrates gewonnen an einem herkömmlichen, mit Titan dotierten Quarzglases, das nach dem Mehrbrennerverfahren gemäß der US-A-5979751 hergestellt wurde und

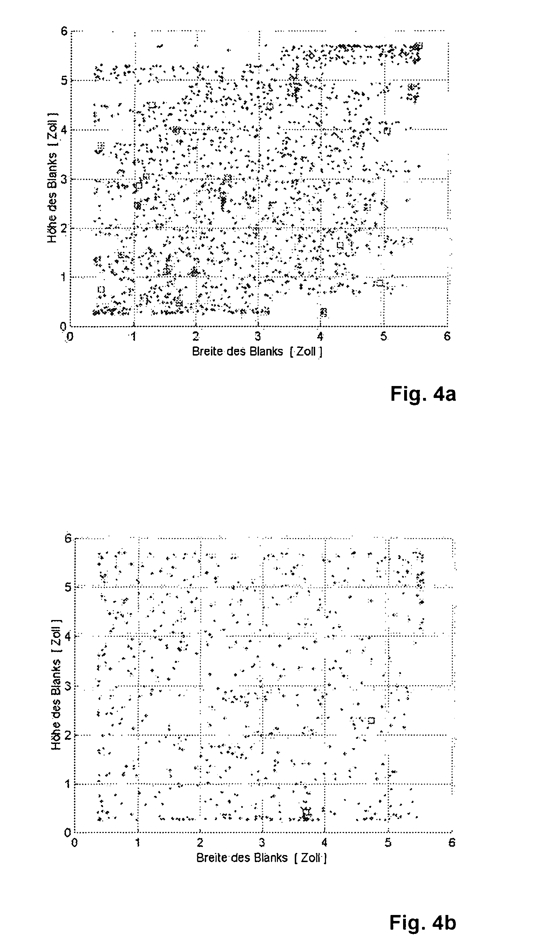

- Fig. 4: eine Defektmap eines 6"-Maskblanksubstrates eines erfindungsgemäßen, mit Titan dotierten Quarzglases.

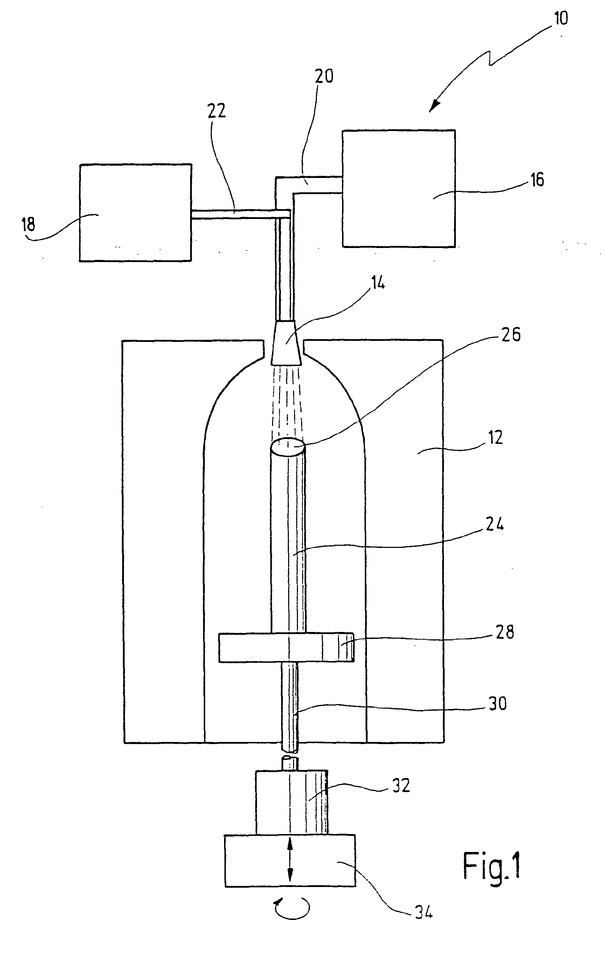

In Fig. 1 ist eine Vorrichtung zur Herstellung eines ersten Formlings 24 durch Flammenhydrolyse schematisch dargestellt und insgesamt mit der Ziffer 10 bezeichnet.

Die Vorrichtung 10 weist eine Ofenmuffel 12 auf, an deren Boden ein Target 28 zum Aufwachsen eines ersten Formlings 24 angeordnet ist. Das Target 28 ist mittels eines außerhalb der Ofenmuffel 12 angeordneten Motors 32 über eine Antriebswelle 30 rotierend antreibbar. Dabei ist zusätzlich ein Stelltrieb 34 vorgesehen, mittels dessen das Target 28 in Axialrichtung verstellt werden kann, wie durch den Doppelpfeil angedeutet ist. Durch eine Öffnung in der Decke der Ofenmuffel 12 ragt ein Brenner 14 in den Hohlraum der Ofenmuffel hinein. Der Brenner ist über eine Leitung 20 mit einer geeigneten Brennstoffversorgung, also bspw. mit einem H₂/O₂-Brennergas-Dosiersystem gekoppelt. Ferner ist an dem Brenner 14 eine Leitung 22 zur Zuführung von gasförmigen Precursoren zur Herstellung von TiO₂-dotiertem Quarzglas angeschlossen. Bei den Precursoren kann es sich etwa einer Dotierung mit TiO₂ bspw. um SiCl₄ und um TiCl₄ handeln, die der Brennerflamme in gasförmiger Form zugeführt werden. In der hohen Temperatur der Brennerflamme (> 2000°C) zersetzen sich die Chloride und bilden SiO₂ und TiO₂, so dass sich TiO₂dotiertes Quarzglas auf dem Target 28 abscheidet.

Für kationische Dotierungselemente kommen etwa die folgenden chlorhaltigen Verbindungen in Frage:

| | | | |
|---|---|---|---|
| Ti | TiCl₄ | Cr | CrO₂Cl₂ |
| Zr | ZrCl₄ | Mo | MoCl₅, MoCl₄, MoO₂ Cl₂ |
| Hf | HfCl₄ | W | WCl₅, WOCl₄, WO₂Cl₂ |
| V | VCl₄, VOCl₃ | B | BCl₃ |
| Fe | FeCl₃ | Al | AlCl₃ |
| Nb | NbCl₅ | Ge | GeCl₄ |
| Ta | TaCl₅ | Sn | SnCl₄ |
| P | PCl₃, PCl₅, POCl₃ | | |

Im Fall der Dotierung mit Fluor kommen etwa die folgenden Gase in Frage: SiF₄, CF₄, C₂F₆, NF₃.

Von allen Elementen können auch metallorganische Verbindungen, d.h. Alkyl-, RₙE oder Alkoxyverbindungen E(OR)ₙ bzw. Mischformen davon, etwa RnE(OR)ₘ₋ₙ, als chlorfreie Precursoren eingesetzt werden.

Während der Flammenhydrolyse wird der Abstand zwischen dem ersten Formling 24 und dem Brenner 14 durch Bewegung des Stelltriebes 34 konstant gehalten. Ferner wird das Target 28 während der Flammenhydrolyse rotierend angetrieben. Ggf. kann der Brenner zusätzlich in Querrichtung bewegt werden.

Im Laufe der Zeit wächst so allmählich ein langer, dünner Formling 24 (auch Walze genannt) auf dem Target 28 auf. Da der Abstand zwischen dem dem Brenner 14 zugewandten Ende des Formlings 24, das als Kappe bezeichnet wird, konstant gehalten wird, ergeben sich während des gesamten Prozesses gleichmäßige Bedingungen. Da ferner nur ein einziger Brenner verwendet wird, können keine Verwirbelungen auftreten, wie es bei herkömmlichen Mehrbrennerverfahren stets der Fall ist.

Gemäß dem erfindungsgemäßen Einkammerverfahren wird lediglich eine einzige Hauptströmung im Bereich der Aufschmelzzone ausgeprägt wird.

Vorzugsweise wird im beschriebenen Verfahren mit außenmischenden Ringspaltbrennern gearbeitet. Die Anzahl der Ringdüsen, die sich um eine zentral angeordnete Rohstoffdüse anordnen richtet sich nach der erforderlichen Leistung für die beabsichtigte Schmelze.

Für einen optimalen Schmelzprozess ist eine gleichmäßige verwirblungsfreie Umströmung der Aufschmelzzone (Kappe) notwendig.

Sinnvollerweise werden hierzu geeignete Brenngaseinstellungen vorgenommen und bestimmte konstruktive Maßnahmen getroffen.

Zu den konstruktiven Maßnahmen zählen Brennerlochgeometrie und die Innenkontur der Muffel im Bereich der Kappe. Die verfahrenstechnische Einstellung der Brennergase sollte so gewählt werden, dass in Abhängigkeit der Spaltgeometrie des Brenners über die Volumenströme eine von Innen nach Außen abnehmende Strömungsgeschwindigkeit realisiert wird. Dies bewirkt ein geschlossenes Flammenbild und stellt sicher, dass die im Zentrum entstehenden Produktpartikel durch die Gasströmung ungestört zur Aufschmelzzone gelangen.

Ein weiterer Parameter ist die sich ergebende Form der Kappe. Diese sollte stetig und annähernd kugelförmig sein. Die Brennerstellungen bzw. Verfahrkurven sollten so gewählt werden, dass keine extremen Vertiefungen im Zentrum entstehen. Der Brenner sollte einen möglichst konstanten Abstand zum Partikelauftreffpunkt zwischen 150 und 250 mm, vorzugsweise 200 mm, haben.

Die konstruktive Ausführung des Ofeninnenraumes (Brennerloch & Muffelinnenkontur) sollte vorzugsweise folgende Kriterien erfüllen. Das Brennerloch sollte stetig kegelförmig sich stetig öffnend mit einem Winkel von 10 bis 20°, vorzugsweise 13° ausgeführt sein, so dass der Flammeaußenrand einen Abstand von ca. 10 bis 20 mm zum Feuerfestmaterial der Muffel aufweist. Für die Muffelinnenkontur gilt, dass der Abstand zur Kappe 20 bis 60 mm, vorzugsweise 30 mm betragen sollte. Die Form sollte so ausgeführt werden, dass keinerlei scharfe Kanten vorhanden sind und die angestrebte Kappengeometrie annähernd nachgebildet wird.

Die genannten Maßnahmen garantieren einen konstanten Partikelfilm von 1 bis 2 mm Stärke über der reaktiven Aufschmelzzone der Kappe und verhindern damit eine Einbringung von Defekten (Fremdpartikel und Glasrußpartikel) in die Schmelze.

Als Target 28 kann eine Scheibe aus einem geeigneten Material verwendet werden, wie z.B. aus Quarzglas oder dotiertem Quarzglas verwendet werden.

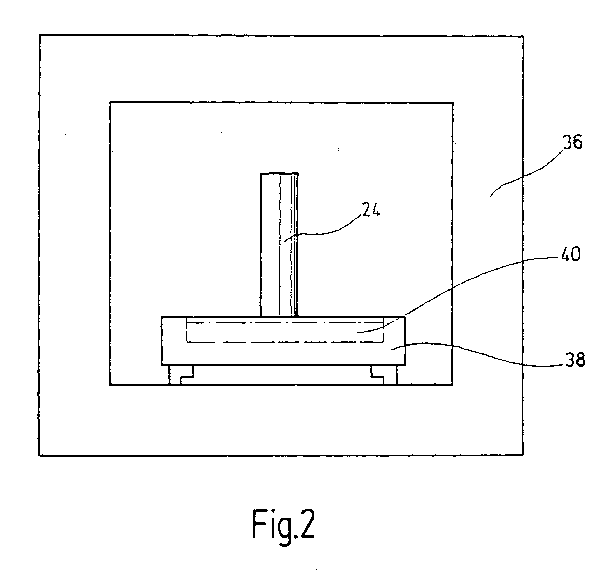

So hergestellte erste Formlinge 24 werden vorzugsweise anschließend in einer geeigneten Form, z.B. einem Graphittiegel 38 unter Schutzgas unter Schwerkrafteinfluss zu zweiten Formlingen umgesenkt, deren Form der Form des gewünschten Endproduktes angenähert ist (Fig. 2). Der Umsenkprozess kann als sogenanntes "Drucksenken" durchgeführt werden, wobei die ersten Formlinge 24 mit einem Gewicht von z.B. 10 kg beschwert werden.

Der Umsenkprozess kann, wie in Fig. 2 dargestellt, in einem herkömmlichen elektrisch beheizten Ofen 36 bei Temperaturen in der Größenordnung von ca. 1600°C erfolgen.

Ein während des Umsenkprozesses auftretender Kontakt des Materials mit dem Graphittiegel 38 ist unbeachtlich, da ein solcher Kontakt lediglich im Randbereich auftritt.

Etwaige auf diese Weise eingeführte Defekte sind keineswegs mit den Defekten vergleichbar, die bei der Herstellung von Boules im herkömmlichen Mehrbrennerverfahren bei den hohen Temperaturen der Flammenhydrolyse beim Aufwachsen des ersten Formlings 24 auftreten.

Noch vorhandene Schlieren im ersten Formling 24 werden durch den beim Umsenken auftretenden Fließfaktor deutlich verringert. So werden etwa Schlierendicken von 30 bis 50 µm im ersten Formling 24 durch den Umsenkprozess auf Schlierenabstände von bis zu 10 µm oder darunter abgebaut.

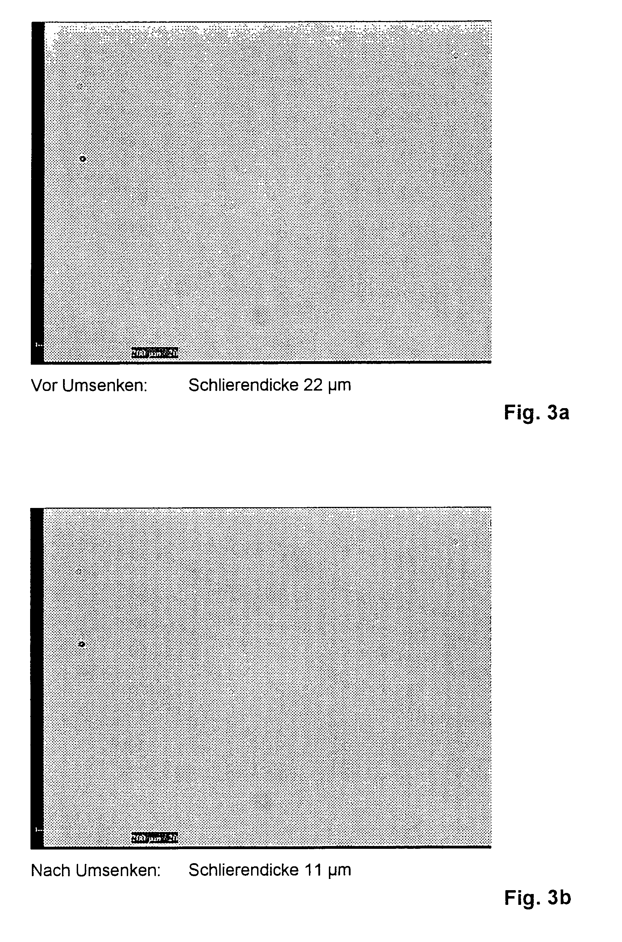

Die deutliche Verringerung der Schlierendicke wird durch das Umsenken wird durch die Figuren 3a und 3b demonstriert, die mit dotiertes Quarzglas mit einer Dotierung von etwa 6,8 Gew.-% TiO₂ zeigen.

Die Form der Tiegel 38 für den Umsenkprozess kann an die endgültige Form des gewünschten Produktes angenähert sein, so dass nur noch eine Endbearbeitung im Wesentlichen durch Schleifen und Polieren notwendig ist, um bspw. Spiegel für die EUV-Lithografie herzustellen.

Fig. 4 zeigt durch Laserscannen gewonnenen Defektmaps von 6"-Maskblanksubstraten aus Ti-dotiertem Quarzglas hergestellt a) nach dem Mehrbrenner-Verfahren (ULE^{TM}) und b) hergestellt nach dem erfindungsgemäßen Einbrenner-Verfahren nach einer für Photomasken aus Quarzglas üblicherweise verwendeten Politur. In beiden Fällen betrug die Konzentration an TiO₂ etwa 6,8 Gew.-% wie bei Fig. 3a bzw. 3b.

Dabei betrug die Nachweisgrenze etwa 200 Nanometer Defektgröße. Dem gemäß ist das nach dem Einbrenner-Verfahren hergestellte Material mit deutlich weniger Defekten behaftet als das Glas, das mit dem Mehrbrenner-Verfahren erschmolzen wurde.

Insbesondere sind im Fall des herkömmlichen ULE-Maskensubstrats sehr große Defekte (Größe 2 bis 11 Mikrometer) zu erkennen, die bei dem erfindungsgemäßen Material nicht vorhanden sind. Eine derartige Defektbelastung ist mit Blick auf die Verwendung der Komponente als Substrat für EUV-Masken nicht tolerabel.

## Patentansprüche

1. Verfahren zur Herstellung von Glaskörpern aus dotiertem Quarzglas durch Flammenhydrolyse, bei dem mittels eines einzelnen Brenners (14), dem Brennstoff und Precursoren zur Bildung des dotierten Quarzglases zugeführt werden, ein erster Formling (24) auf einem Target (28) erzeugt wird.

2. Verfahren nach Anspruch 1, bei dem eine Dotierung verwendet wird, die Titan, Fluor, Germanium, Vanadium, Chrom, Aluminium, Zirkon, Eisen, Zink, Zinn, Tantal, Bor, Phosphor, Niob, Blei, Hafnium, Molybdän oder Wolfram enthält.

3. Verfahren nach Anspruch 1 oder 2, bei dem der erste Formling (24) anschließend zu einem zweiten Formling (40) umgesenkt wird, der eine größere Breite und geringere Höhe als der erste Formling (24) aufweist.

4. Verfahren nach Anspruch 1, 2 oder 3, bei dem eine Dotierung von mindestens 0,1 Gew.-%, vorzugsweise von mindestens 0,5 Gew.-%, weiter bevorzugt von wenigstens 1 Gew.-% eingestellt wird.

5. Verfahren nach Anspruch 1, 2 oder 3, bei dem eine Dotierung mit Fluor von mindestens 0,005 Gew.-%, vorzugsweise von mindestens 0,01 Gew.-% eingestellt wird.

6. Verfahren nach einem der vorhergehenden Ansprüche, bei dem das Target (28) während der Herstellung des ersten Formlings (24) rotierend angetrieben wird.

7. Verfahren nach einem der vorhergehenden Ansprüche, bei dem der Abstand des ersten Formlings (24) zum Brenner (14) während der Herstellung des ersten Formlings (24) annähernd konstant gehalten wird.

8. Verfahren nach einem der vorhergehenden Ansprüche, bei dem das Target (28) annähernd horizontal angeordnet wird und der erste Formling in annähernd vertikaler Richtung aufwächst.

9. Verfahren nach einem der Ansprüche 1 bis 7, bei dem das Target (28) annähernd vertikal angeordnet wird und der erste Formling in annähernd horizontaler Richtung aufwächst.

10. Verfahren nach einem der vorhergehenden Ansprüche, bei dem als Target (28) eine Scheibe verwendet wird, die vorzugsweise aus Quarzglas oder dotiertem Quarzglas besteht.

11. Verfahren nach einem der Ansprüche 3 bis 10, bei dem sich an den Umsenkschritt mindestens ein weiterer Umsenkschritt anschließt.

12. Verfahren zur Herstellung einer EUVL-Komponente, bei dem ein Formling (40) nach einem der vorhergehenden Ansprüche hergestellt wird und auf die gewünschte Form, Größe und Oberflächenbeschaffenheit feinbearbeitet wird.

13. Glaskörper aus dotiertem Quarzglas, mit einer Schlierendicke von ≤ 70 Mikrometer, vorzugsweise von ≤ 40 Mikrometer, weiter bevorzugt von ≤ 20 Mikrometer, besonders bevorzugt von ≤ 15 Mikrometer.

14. Glaskörper aus dotiertem Quarzglas, der bei einer Messempfindlichkeit von mindestens etwa 200 Nanometer eine Defektdichte von höchstens 50 Defekten pro Quadratzentimeter aufweist, vorzugsweise höchstens 25 Defekte pro Quadratzentimeter, besonders bevorzugt von höchstens 10 Defekten pro Quadratzentimeter.

15. Verwendung eines Glaskörpers nach Anspruch 13 oder 14 als Komponente für die EUV-Lithographie oder als Ausgangsmaterial zur Herstellung einer solchen Komponente, insbesondere als Maskensubstrat, als Spiegelsubstrat oder als Stage.
